# EUROPÄISCHE PATENTANMELDUNG

(11) **EP 0 671 350 A1**
(43) Veröffentlichungstag der Anmeldung: **13.09.1995**
(21) Anmeldenummer: 95102543.6
(22) Anmeldetag: 23.02.1995
(51) Int. Cl.: B65G 27/04, B65G 27/34, A24C 5/39

(54) **Schwingförderer zum Transportieren von Schüttgut, insbesondere Tabak**

(30) Priorität: 09.03.1994 DE 4407789
(71) Anmelder: Hauni Maschinenbau Aktiengesellschaft, D-21033 Hamburg (DE)
(72) Erfinder: Kämpf, Joachim, D-21614 Buxtehude (DE)

(57) **Zusammenfassung**

Die Erfindung betrifft eine Schwingförderrinne zum Transportieren von faserigem Fördergut, insbesondere Tabak.
Es ist das Ziel, die bei der Beschickung derartiger Förderer bzw. beim Abwurf des Fördergutes entstehende Staubentwicklung zu reduzieren.
Erreicht wird dies dadurch, daß wenigstens eine der Stirnkanten der Schwingförderrinne (7) im Aufgabe- bzw. Abgabebereich als aerodynamisches Begrenzungsprofil ausgebildet ist, insbesondere an der abwerfenden Stirnkante (9) in Form eines vorgewölbten rohrförmigen Rundprofils (17).
Diese Ausbildung bewirkt eine aerodynamische Luftströmung am Stirnkantenprofil, welche die Flugbahn des Fördergutes definiert führt und Staub bindet.

## Beschreibung

Die Erfindung betrifft eine Schwingförderrinne zum Transportieren bzw. zum Abgeben und Aufnehmen von faserigem oder körnigem bzw. rieselfähigem Schüttgut, insbesondere Tabak, mit abgabeseitigen und aufgabeseitigen, in wesentlichen quer zur Schwingförderrichtung verlaufenden oszillierenden Stirnkanten.

Beim Transport von Schüttgut der eingangs genannten Art auf Schwingförderern werden erhebliche Mengen von insbesondere staubförmigen Gutanteilen ausgetragen bzw. in die Umwelt abgegeben, da bei den oszillierenden Förderhüben des Schwingförderers erhebliche Luftmengen verdrängt werden, welche an verschiedenen Bauteilen des Fördertroges unkontrollierbare Luftströmungen erzeugen, die beim Durchströmen des Fördergutes den genannten nachteiligen Effekt bewirken.

Der Erfindung liegt die Aufgabe zugrunde, den Schwingförderer in der im Hinblick auf die Staubentwicklung und Wurfdynamik besonders kritischen Aufgabe- und Abgabezone zu optimieren.

Diese Aufgabe wird erfindungsgemäß dadurch gelöst, daß wenigstens eine der Stirnkanten mit einem aerodynamisch gerundeten Begrenzungsprofil ausgestattet ist.
Eine besonders effektive und einfache Ausgestaltung besteht darin, daß der Rinnenboden an der abgabeseitigen Stirnkante der Schwingförderrinne in ein rohrförmig vorgewölbtes Rundprofil übergeht. Ein derartiges Rundprofil an der Abwurfkante verhindert einen Strömungsabriß der verdrängten Luft, indem die Luftströmung praktisch der Krümmung des Rundprofils folgt anstatt das Fördergut quer zur Förder- bzw. Fallrichtung zu durchströmen, so daß auch Staubanteile des Fördergutes im Fördergut gefangen bleiben.

Zusätzlich wird eine Luftverwirbelung im gesamten Abgabebereich nach einem weiteren Vorschlag dadurch vermieden, daß sich unterseitig an das sich im wesentlichen um das Maß des Rohrradius vorwölbende Rundprofil ein schräg auf den Rinnenboden zulaufender Doppelboden anschließt.
Zweckmäßigerweise ist der Doppelboden mit einer seitlich hochgezogenen Blechschürze versehen, welche verhindert, daß sich zwischen dem Rinnenboden und dem Doppelboden Fördergut ablagern kann.
Als optimale Ausgestaltung im rückwärtigen Rinnenbereich hat sich nach einem weiteren Vorschlag erwiesen, daß der Rinnenboden im Bereich der aufgabeseitigen Stirnkante mit einer als rohrförmiges Rundprofil ausgebildeten Rückwand versehen ist. Auch diese Ausbildung verhindert Verwirbelungen in der hinteren Rinnenaufgabezone, indem sich auch hier bei jedem Vorwärtshub des Schwingförderers die Luftströmung an das Rohrprofil anlegt und damit Staub bindet.
Für den Fall, daß das Fördergut bzw. Tabak während des Förderungsprozesses einer Konditionierung unterzogen wird und dabei Feuchtigkeit aufnimmt, deren Überschuß während der Förderung abgeleitet werden soll, wird eine Variante vorgeschlagen, gemäß der mit einem Abstand und parallel zur aufgabeseitigen Stirnkante ein sich konkav-symmetrisch zum Rinnenboden erstreckendes Halbrohr-Profil vorgesehen ist. Diese Ausbildung bewirkt einerseits eine definierte Strömung in Förderrichtung beim Vorwärtshub des Schwingförderers, wodurch das Fördergut zielgerichtet transportiert wird bzw. unerwünschte Gutansammlungen im Aufgabebereich verhindert werden, und andererseits einen ungehinderten Wasserabfluß über die hintere Stirnkante des Schwingförderers.

Der mit der Erfindung erzielte Vorteil besteht darin, daß der Strömung eine dem Begrenzungsprofil angepaßte definierte Führung verliehen wird, welche die Geschwindigkeit der Strömung reduziert und einen Strömungsabriß sowie damit eine Durchströmung des Fördergutes quer zur Förder- bzw. Fallrichtung verhindert. Auf diese Weise wird einerseits die Staubentwicklung und andererseits ein Herauslösen von Gutanteilen mit spezifisch hohem Strömungswiderstand wirksam verhindert.

Die Erfindung wird nachstehend anhand der in den beigefügten Abbildungen dargestellten Ausführungsbeispiele näher erläutert.

Hierbei zeigen:
- Figur 1: eine Draufsicht auf ein schematisch dargestelltes Schwingförderrinnen-System,
- Figur 2: eine Seitenansicht auf den Abgabebereich einer Schwingförderrinne in Richtung des Pfeils A gemäß Figurg 1,
- Figur 3: eine Seitenansicht des Aufgabebereichs der Schwingförderrinne in Richtung des Pfeils B gemäß Figur 1 und
- Figur 4: eine abgewandelte Ausführungsform des Aufgabebereichs der Schwingförderrinne.

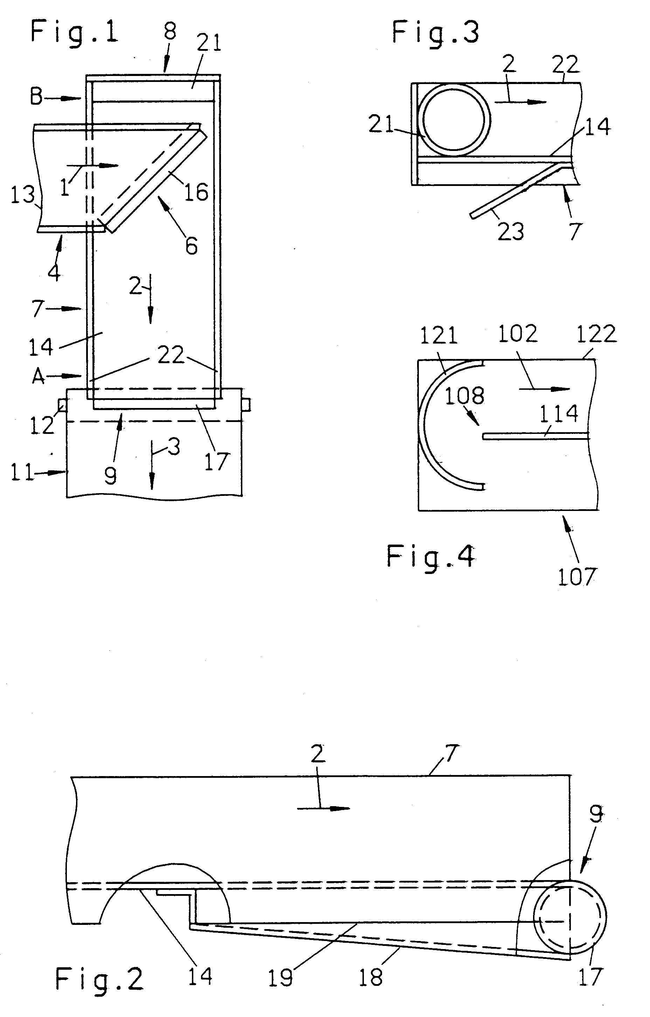

Das gemäß Figur 1 aus mehreren Förderelementen beispielhaft gebildete Fördersystem, dessen Förderrichtung durch die Pfeile 1, 2, 3 gekennzeichnet ist, weist eine erste Schwingförderrinne 4 mit einer abgabeseitigen, schräg zur Förderrichtung 1 verlaufenden Stirnkante 6, eine darunterliegende zweite Schwingförderrinne 7 mit einer aufgabeseitigen, quer zur Förderrichtung verlaufenden Stirnkante 8 und einer abgabeseitigen Stirnkante 9 sowie ein darunterliegendes Förderband 11 auf, dessen eine dargestellte Umlenkrolle mit 12 bezeichnet ist.
Die genannten abgabeseitigen und aufgabeseitigen Stirnkanten 6, 8, 9 sind jeweils mit einem aerodynamisch gerundeten Begrenzungsprofil ausgestattet, und zwar im Fall der abgabeseitigen Stirnkanten 6 und 9 in Form eines an der Unterseite des Rinnenbodens 13 der Schwingförderrinne 4 bzw. an der Unterseite des Rinnenbodens 14 der Schwingförderrinne 7 rohrförmig um das Maß des Rohrradius vorgewölbten Rundprofils 16 bzw. 17 gemäß Figur 2. An der Unterseite des Rundprofils 17 schließt sich ein schräg nach hinten auf den Rinnenboden 14 zulaufender Doppelboden 18 an, der mit seitlichen hochgezogenen Blechschürzen 19 versehen ist.
An der hinteren, aufgabeseitigen Stirnkante 8 ist der Rinnenboden 14 der Schwingförderrinne 7 gemäß Figur 3 mit einem eine Rückwand bildenden rohrförmigen Rundprofil 21 versehen, welches auf den Rinnenboden 14 gesetzt und an den Seitenwänden 22 der Schwingförderrinne 7 befestigt ist. Mit 23 ist eine der Blattfederhalterungen der Schwingförderrinne angedeutet.
Bei der Variante gemäß Figur 4 ist das rückseitige bzw. aufgabeseitige Begrenzungsprofil der Schwingförderrinne 107 als mit einem Abstand und parallel zur aufgabeseitigen Stirnkante 108 sowie konkav-symmetrisch zum Rinnenboden 114 verlaufendes Halbrohr-Profil 121 ausgebildet, so daß aus dem Fördergut ausgefälltes Wasser oder dergleichen über die Hinterkante des in diesem Fall in Förderrichtung 102 schräg aufwärts angestellten Rinnenbodens 114 abfließen kann.

## Patentansprüche

1. Schwingförderrinne zum Transportieren bzw. zum Abgeben und Aufnehmen von faserigem oder körnigem bzw. rieselfähigem Schüttgut, insbesondere Tabak, mit abgabeseitigen und aufgabeseitigen, im wesentlichen quer zur Schwingförderrichtung verlaufenden oszillierenden Stirnkanten, dadurch gekennzeichnet, daß wenigstens eine der Stirnkanten (6, 8, 9) mit einem aerodynamisch gerundeten Begrenzungsprofil (16; 17; 21) ausgestattet ist.

2. Schwingförderrinne nach Anspruch 1, dadurch gekennzeichnet, daß der Rinnenboden (14) an der abgabeseitigen Stirnkante (9) der Schwingförderrinne (7) in ein rohrförmig vorgewölbtes Rundprofil (17) übergeht.

3. Schwingförderrinne nach Anspruch 1 oder 2, dadurch gekennzeichnet, daß sich unterseitig an das sich im wesentlichen um das Maß des Rohrradius vorwölbende Rundprofil (17) ein schräg auf den Rinnenboden (14) zulaufender Doppelboden (18) anschließt.

4. Schwingförderrinne nach Anspruch 3, dadurch gekennzeichnet, daß der Doppelboden (18) mit einer seitlich hochgezogenen Blechschürze (19) versehen ist.

5. Schwingförderrinne nach einem der Ansprüche 1 bis 4, dadurch gekennzeichnet, daß der Rinnenboden (14) im Bereich der aufgabeseitigen Stirnkante (8) mit einer als rohrförmiges Rundprofil (21) ausgebildeten Rückwand versehen ist.

6. Schwingförderrinne nach Anspruch 1, dadurch gekennzeichnet, daß mit einem Abstand und parallel zur aufgabeseitigen Stirnkante (108) ein sich konkav-symmetrisch zum Rinnenboden (114) erstreckendes Halbrohr-Profil (121) vorgesehen ist.
